# EUROPÄISCHE PATENTSCHRIFT

(11) **EP 0 796 692 B1**
(45) Veröffentlichungstag und Bekanntmachung des Hinweises auf die Patenterteilung: **12.09.2001**
(21) Anmeldenummer: 97103798.1
(22) Anmeldetag: 07.03.1997
(51) Int. Cl.: B23D 33/02, B21B 15/00

(54) **Verfahren und Vorrichtung zum Abtrennen und Ableiten von Vorder- und/oder Hinterschopfen an laufendem Walzgut**
Apparatus and method for cutting off and guiding trailing and leading ends of running stock
Appareil et méthode pour couper et pour guider les ébouts d'une matière laminée en mouvement

(30) Priorität: 22.03.1996 DE 19611302
(43) Veröffentlichungstag der Anmeldung: 24.09.1997
(73) Patentinhaber: SMS Demag AG, 40237 Düsseldorf (DE)
(72) Erfinder: Grenz, Günter, 40670 Meerbusch (DE); Oeztuerk, Nurettin, 41541 Dormagen (DE)
(74) Vertreter: Valentin, Ekkehard, Dipl.-Ing.

(56) Entgegenhaltungen:
- EP-A- 0 618 033
- DE-A- 2 900 013

## Beschreibung

Die Erfindung betrifft ein Verfahren und eine Vorrichtung zum Abtrennen und Ableiten von Vorder- und/oder Hinterschopfen an laufendem Walzgut mit einer ein rotierendes Messersystem oder ein Parallelschneidesystem aufweisenden Schere, nach dem Oberbegriff des Patentanspruchs 1, bzw. 6, und wie aus z.B. EP-A-0 618 033 bekannt.

Das Abtrennen und Ableiten von Vorder- und/oder Hinterschopfen an laufendem Walzgut war bisher mit Schwierigkeiten verbunden. Dabei kam es vielfach zu Störungen des Walzvorganges, insbesondere bei einem mit hoher Geschwindigkeit laufenden Walzgut von Draht-, Fein- oder Mittelstahlstraßen. Fallweise war es schwierig, das Walzgut beschädigungsfrei den Scherenbereich passieren zu lassen. Weiterhin bereitete das Abführen von Vorder- und/oder Hinterschopfen Schwierigkeiten, zumindest aber einen relativ großen Arbeitsaufwand.

Aus dem Dokument DE-A-29 00 013 ist ein Verfahren zum Ablenken von laufendem Walzgut aus der Zufuhr-Bewegungsbahn in verschiedene, übereinanderliegende Ablauf-Bewegungsbahnen sowie für aufeinander folgende Trennschnitte eine rotierende Schere zur Durchführung des Verfahrens bekannt. Diesem liegt die Aufgabe zugrunde, das laufende Walzgut auch bei hohen Walzgeschwindigkeiten auf einfache und sichere Art und Weise in verschiedene Laufwege zu leiten. Zur Lösung der Aufgabe wird mit dem bekannten Dokument vorgeschlagen, dass aufeinanderfolgende Trennschnitte am Walzgut abwechselnd mit gegenüber dem Obermesser vorlaufendem Untermesser und mit gegenüber dem Obermesser nachlaufendem Untermesser durchgeführt werden.

Das Dokument EP-A-0 618 033 offenbart als nächstliegender Stand der Technik eine Vorrichtung mit sowohl einer einlaufseitigen, als auch mit einer ablaufseitigen Weiche ausgestatteten Doppel-Weichenanordnung, die zum Abtrennen eines Vorder- oder Hinterschopfes mit einer Hochgeschwindigkeits-Stellvorrichtung in den Wirkungsbereich der Schere eingerückt und zum ungehinderten Durchlauf des Walzgutes zu beiden Seiten ausgeschwenkt werden muss. Diese Doppelweichen-Anordnung benötigt nachteilig eine Vielzahl mechanischer Einrichtungen wie z. B. Stellglieder mit Motor-Getriebeeinrichtungen für abgetrennte Vorder- oder Hinterschopfe etc., die einen großen Aufwand an mechanischen Elementen, größere Stellwege und Stellkräfte sowie erhöhten Verschleiß verursachen.

Ausgehend vom vorgenannten Stand der Technik liegt der vorliegenden Erfindung die Aufgabe zugrunde, eine Vorrichtung sowie ein Verfahren anzugeben, die eine für Walzbetriebe mit hoher Walzgeschwindigkeit störungsfreie Vorder- und/oder Hinterschopfnahme sowie das Ableiten abgetrennter Vorder- oder Hinterschopfe bei schnelllaufendem Walzgut ausschließlich mit statischen Einrichtungen vor und hinter der Schere ermöglichen. Dabei sollen hierfür geeignete Einrichtungen in Relation zur Position und Funktion der Messer während deren Anlauf- oder Bremsphase funktionsfrei sein und die Einleitung der Stabspitze des Walzgutes oder der Schopfe nach Schopfnahme in die der Schere nachgeordneten Führungen durch spezielle Anordnung der Messer und insbesondere eine spezielle Schneidengeometrie des Untermessers ausschließlich durch den Schneidvorgang ermöglichen, ohne dass der voreilende Walzstab seine Richtung und Geschwindigkeit ändern muss, d. h. unter Vermeidung von Beunruhigungen und/oder Störungen des laufenden Walzgutes.

Die Lösung der Aufgabe gelingt bei einer Vorrichtung der im Oberbegriff von Anspruch 1 genannten Art mit der Erfindung durch die im Kennzeichnungsteil beanspruchten konstruktiven, miteinander zusammenwirkenden Bauelemente der Schere und der zugeordneten Leitorgane für das Walzgut.

Ein Verfahren zum Abtrennen und Ableiten von Vorder- und/oder Hinterschopfen an laufendem Walzgut mit einer ein rotierendes Messersystem oder ein Parallelschneidesystem aufweisenden Schere, wobei das Walzgut unter Verwendung einer der Schere vorgeordneten Schwinge mit einer relativ zur Walzlinie vorgegebenen Ausrichtung der Schere zugeführt, darin nach Maßgabe eines Weggebers der Vorder- und/oder Hinterschopf abgetrennt und das aus der Schere ablaufende Walzgut über den Trennkeil eines nachgeordneten Abweisers gehoben und ein abgetrenntes Stück Vorderschopf oder Hinterschopf in eine Schrottrutsche abgeleitet oder über den Trennkeil des Abweisers einer Häckselschere zugeführt und darin zerstückelt wird, ist durch die im Kennzeichnungsteil des Anspruchs 6 aufgeführten Verfahrensmerkmale gekennzeichnet.

Erfindungswesentliche Ausgestaltungen des Verfahrens und der Vorrichtung nach der Erfindung sind entsprechend den Unteransprüchen vorgesehen.

Weitere Einzelheiten, Merkmale und Vorteile des Verfahrens und der Schopfnahmevorrichtung im Zusammenwirken mit einer Rotationsschere werden nachfolgend anhand von Zeichnungen näher erläutert.

Es zeigen:
- Fig. 1: eine Schopfnahmevorrichtung in Seitenansicht,
- Fig. 2: die Schopfnahmevorrichtung gemäß Fig. 1, in Draufsicht,
- Fig. 3a - 3c: Verfahrensabläufe beim Abtrennen und Ableiten eines Vorderschopfes bzw. einer Vorderprobe an Walzgut mit hoher Walzgeschwindigkeit, in Seitenansicht, in Seitenansicht,
- Fig. 4a, 4b: Verfahrensabläufe beim Abtrennen und Ableiten eines Vorderschopfes mit niedriger Walzgeschwindigkeit, in Seitenansicht,
- Fig 5: einen Hinterschopf-Schnitt bei einem Walzgut mit niedriger Walzgeschwindigkeit, in Seitenansicht,
- Fig. 6a - 6c: Verfahrensabläufe beim Abtrennen und Ableiten von Hinterschopf- bzw. Hinterproben an Laufendem Walzgut mit hoher Walzgeschwindigkeit, in Draufsicht,
- Fig. 7a 7c: Verfahrensabläufe gem. Fig. 6a bis 6c, in Seitenansicht.

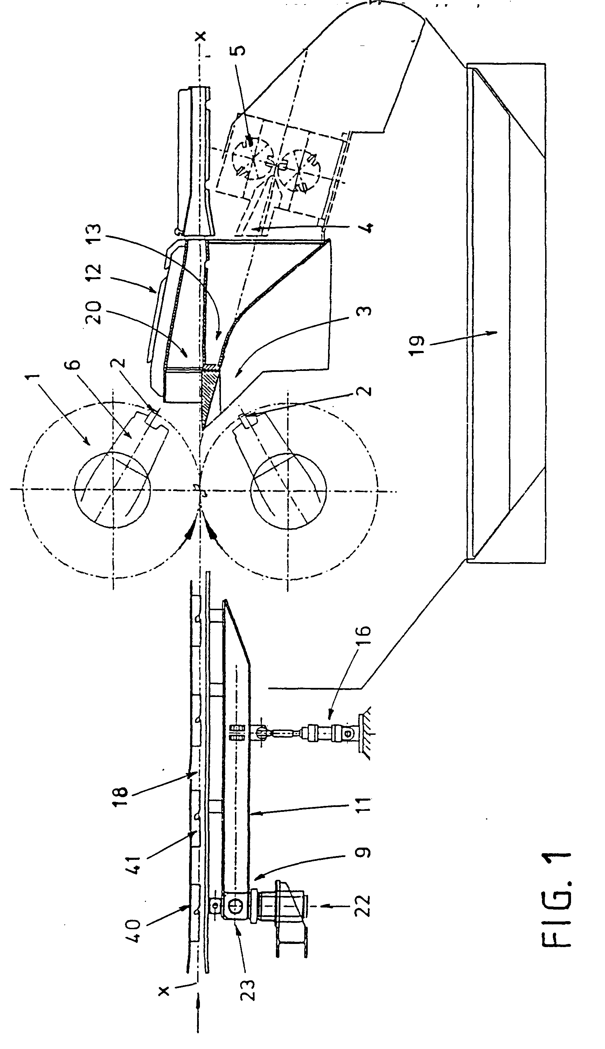

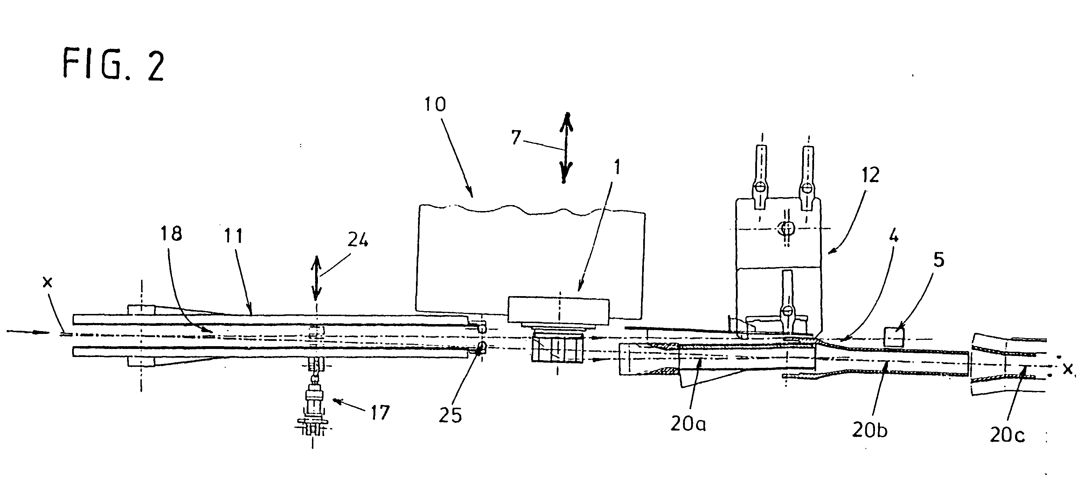

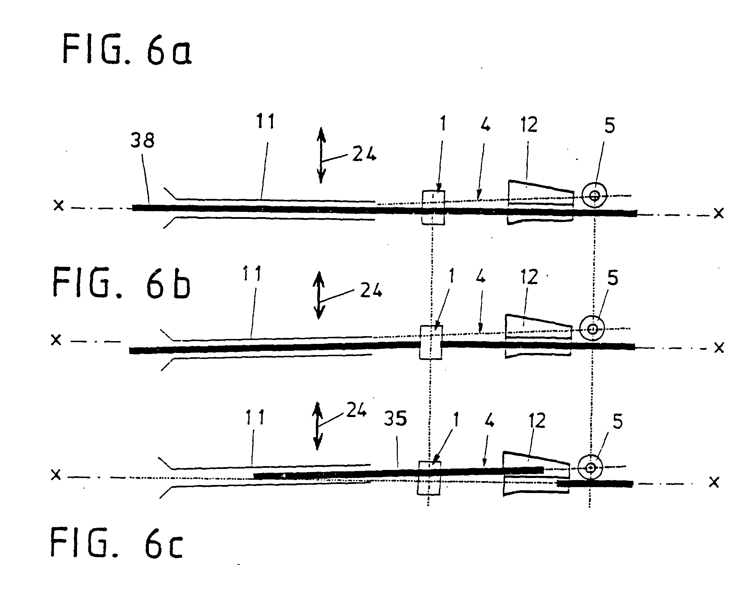

Figur 1 zeigt eine Vorrichtung zum Abtrennen von Vorder- und/oder Hinterschopfen an laufendem Walzgut mit einer Schere (1), die mit einem rotierenden Messersystem zusammenwirkende Messer (2) besitzt. Im Einlaufbereich der Schere (1) ist eine Schwinge (11) angeordnet, die eine U-förmige Führungsrinne (18) mit einer Abdeckung (40) und seitlichen Führungen (41) für durchlaufendes Walzgut trägt. Sie ist am einlaufseitigen Ende in einem Kardangelenk (9) mit horizontaler Achse (23) und vertikaler Achse (22) beweglich gelagert. Zur Verstellung der Höhenlage dient ein Hubaggregat (16), während zum Verschwenken im Winkel gegenüber der Walzlinie (x-x) ein aus der Draufsicht der Figur 2 ersichtliches seitliches Leitorgan (17) vorgesehen ist, durch welches die Rinne (11) entsprechend dem Pfeil (24) seitlich schwenkbar ist. Der Schere (1) mit rotierendem Messersystem oder mit Parallelschneidesystem (10) ist in Durchlaufrichtung ein Abweiser (12) mit einem Trennkeil (13) nachgeordnet. Unterhalb dieses Trennkeils (13) befindet sich eine Schrottrutsche (3) und oberhalb derselben ein Führungskanal (20) für durchlaufendes Walzgut. Bei einer Anordnung entsprechend der schematischen Darstellung in den Figuren 6a bis 6c ist seitlich der Walzlinie (x-x) eine Rinne (4) vorgesehen, an deren Ende die Häckselschere (5) angeordnet ist. Unterhalb der Schrottrutsche (3) bzw. der Häckselschere (5) ist ein Auffangbehälter (19) für Schrott vorgesehen.

Figur 2 zeigt aus der Draufsicht die Vorrichtung zur Schopfnahme und zum Ableiten der abgetrennten Schopfe, mit der Schwinge (11) und einer integrierten Führungsrinne (18) mit zur seitlichen Verschwenkung vorgesehenem Leitorgan (17). Sowohl dieses als auch das Hubaggregat (16, Fig. 1) können zweckmäßig hydraulische Kolben/Zylinder-Einheiten sein. Für störungsfreie Führung von empfindlichem Walzgut wie Edelstählen kann die Schwinge (11) am auslaufseitigen Ende mit Führungsrollen (25) ausgerüstet sein. Die Draufsicht zeigt die Anordnung der Schere (1 bzw. 10), wobei es sich bei dieser je nach dem zu schneidenden Walzgut um eine Ausführung mit rotierendem Messersystem (1) oder mit Parallelschneidesystem (10) handelt. Beispielsweise wird zum Schnitt von Rundmaterial mit kleinem Durchmesser ebenso wie für Flachprofile bevorzugt das rotierende Messersystem und für Rundmaterial mit größerem Durchmesser, ebenso wie für stärkeres Flachmaterial, eine Schere (10) mit Parallelschneidesystem verwendet.

Für die Schere (1) mit rotierendem Messersystem ist ein Abweiser (12) mit langem Trennkeil (13, Fig. 1) und einer darunterliegenden Schrottrutsche (3, Fig. 1) oder mit einer seitlich abzweigenden Rinne (4) mit nachgeordneter Häckselschere (5, Fig. 6) vorgesehen.

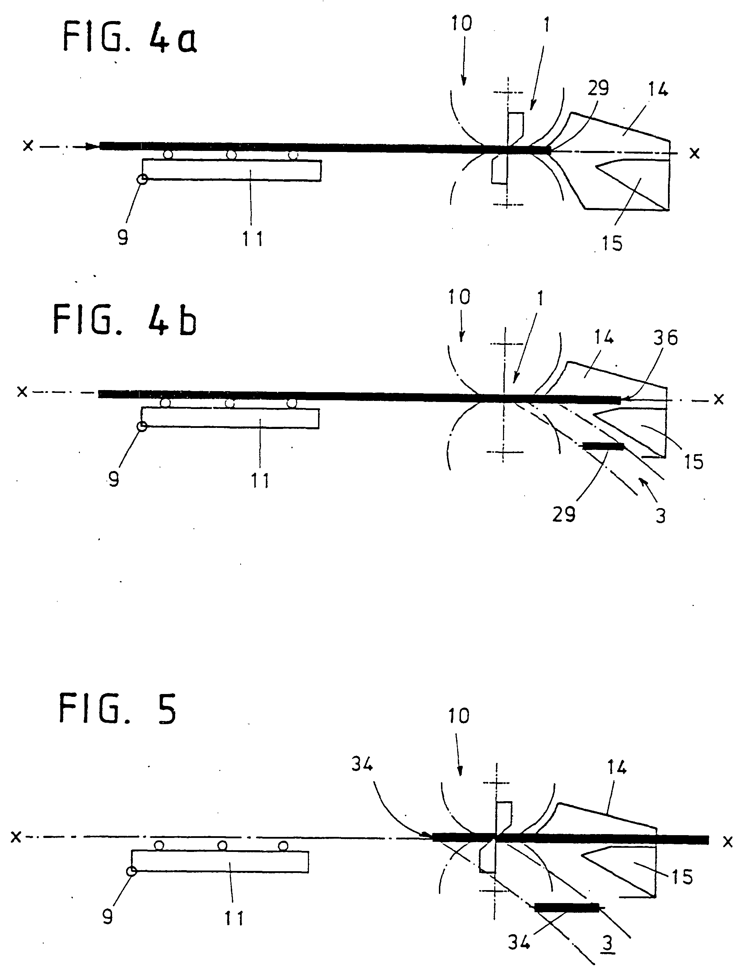

Für den störungsfreien Weitertransport eines Walzstranges nach Abtrennen eines Hinterschopfes (34, 35, Fig. 5, 6c) sind Führungskanäle (20a - 20c, Fig.2) vorgesehen.

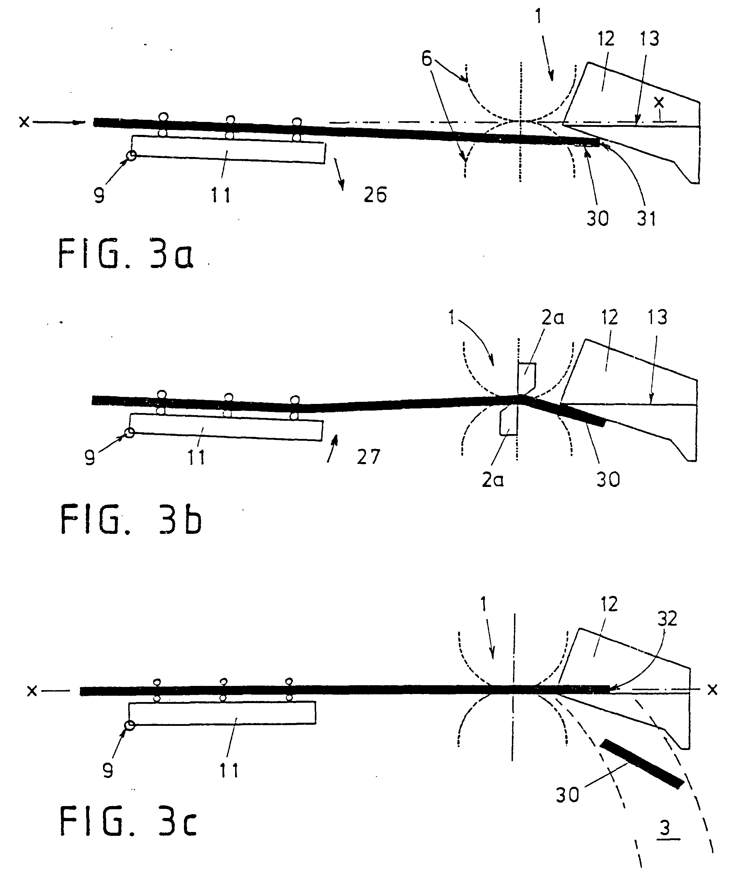

Die Funktion der Vorrichtung zur Schopfnahme im Zusammenwirken mit einer Schere beim Schneiden von Vorder- und/oder Hinterschopf an laufendem Walzgut und zum Ableiten der abgetrennten Schopfe kann bestens anhand schematischer Darstellungen der Figuren 3a bis 3c, 4a, 4b, Fig. 5 oder Fig. 6a bis 6c sowie 7a bis 7c erläutert werden.

Entsprechend den Verfahrensabläufen der Figuren 3a bis 3c wird zum Abtrennen und Ableiten eines Vorderschopfes (30) bzw. einer Probe von stabförmigem Walzgut mit kleinem Durchmesser die Schwinge (11) derart aus der Horizontalebene um das Kardangelenk (9) in Pfeilrichtung (26), nach unten geschwenkt, daß die Stabspitze (31) des Walzgutes unter den Trennkeil (13) des Abweisers (12) geführt wird, wobei in synchronisierten Bewegungsabläufen nach Maßgabe eines der Schere (1) zugeordneten Weggebers die Messerträger (6) der Schere (1) aus einer definierten Startposition rotativ beschleunigt und der Vorderschopf (30) im Berührungspunkt der beiden Messer (2a, Fig. 3b) in vorgegebener Länge abgetrennt und von dem Trennkeil (13) nach unten in eine Schrottrutsche (3, Fig. 3c) abgeleitet und zum Zeitpunkt des Schnittes die Schwinge (11) gemäß Pfeil (27) angehoben und die neu gebildete Stabspitze (32) durch den unteren Messerrücken über den Trennkeil (13) in die Walzlinie (x-x) gehoben, weitergefördert und die Schere (1) in ihre Startposition zurückgedreht wird.

Vor dem Einlauf der ersten Stabspitze aus einem Knüppel muß die Schwinge (11) wieder abgesenkt werden.

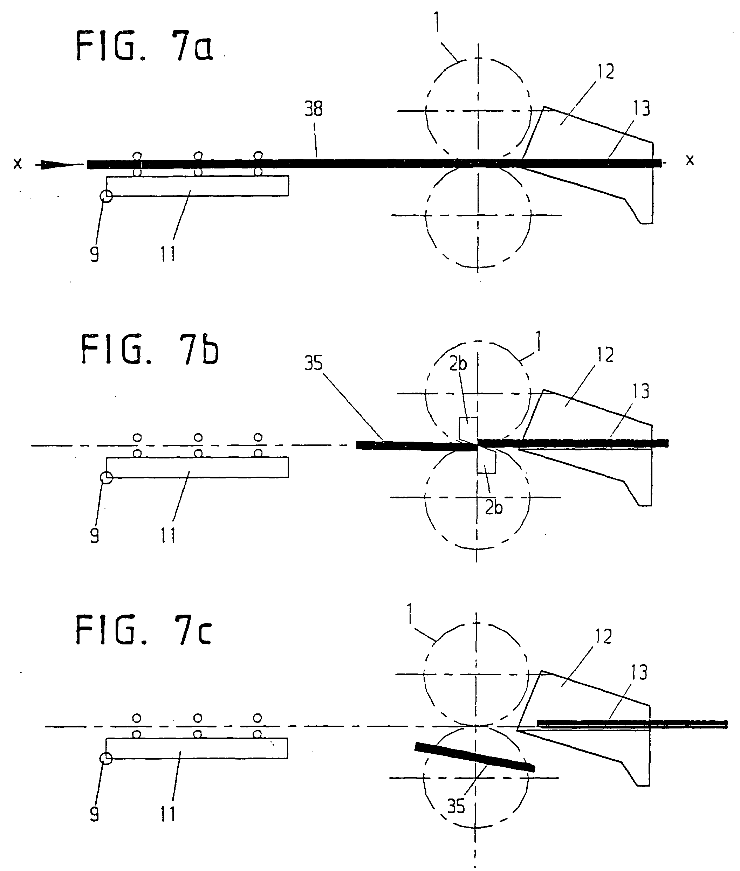

Das Abtrennen und Ableiten eines Hinterschopfes (35) bei einem stabförmigen Walzgut (38) mit kleinem Durchmesser ist schematisch in den Figuren 6a bis 6c dargestellt und zwar aus der Draufsicht sowie in den Figuren 7a bis 7c in Seitenansicht. Dabei wird die Schwinge (11) in der horizontalen Ebene nach Art einer Weiche gegen die Schere (1) gemäß Pfeil (24) in Richtung der Messerkonfiguration (2b) für Hinterschopf (35, Fig. 7b) geschwenkt und vom Stabende (38) ein Stück in vorgegebener Länge als Hinterschopf (35) im Berührungspunkt der beiden Messer (2b) abgetrennt und durch den oberen Messerrücken nach unten in eine Schrottrutsche gedrückt, oder aus der Walzlinie (x-x) in eine der Schere (1) nachgeordnete Rinne (4) zu einer Häckselschere (5) abgeleitet, durch diese in Stücke zerteilt und für den nächsten Stab die Schwinge (11) gemäß Pfeil (24) wieder in die Walzlinie (x-x) zurückgeschwenkt.

Das Abtrennen und Ableiten eines Vorderschopfes (29) bei einem stabförmigen Walzgut mit großem Durchmesser bzw. einer Probe zeigen die Figuren 4a und 4b. Dabei bleibt die Schwinge (11) in ihrer waagerechten Position in der Walzlinie (x-x) stehen, wobei nach dem Schnitt der Schere mit Parallelschneidesystem (10) der abgetrennte Vorderschopf (29) bzw. die Probe vor einem verkürzten Trennkeil (15) eines Abweisers (14) frei in eine Schrottrutsche (3) fallengelassen wird und die nachlaufende neu gebildete Spitze (36) mittels unterem Messerrücken über den Trennkeil (15) des Abweisers (14) geworfen und weitergefördert wird.

Das Abtrennen und Ableiten eines Hinterschopfes (34) bei einem stabförmigen Walzgut mit großem Durchmesser ist in der Figur 5 gezeigt. Auch dabei bleibt die Schwinge (11) in ihrer waagerechten bzw. Ausgangs-Position in der Walzlinie (x-x) und der Stab wird über den Trennkeil (15) gefördert und bei Erreichen einer vorgegebenen Restlänge relativ zum Parallelschneidesystem (10) der Schere diese Restlänge als Hinterschopf (34) abgetrennt und in einer Schrottrutsche (3) im freien Fall abgeleitet, wogegen der übrige Stab ungebremst über den Trennkeil (15) weiterläuft.

## Patentansprüche

1. Vorrichtung zum Abtrennen und Ableiten von Vorder- und/oder Hinterschopfen an laufendem Walzgut mit einer ein rotierendes Messersystem oder ein Parallelschneidesystem aufweisenden Schere (1, 10), **gekennzeichnet durch**, eine dieser vorgeordneten, um ein Kardangelenk (9) in einem Winkel zu einer horizontalen und/oder vertikalen Ebene verschwenkbare Schwinge (11), welche an dem dem Kardangelenk (9) entgegengesetzten Ende ein Hubaggregat (16) zur Neigungseinstellung und ein Leitorgan (17) zur seitlichen Auslenkung aus der Walzlinie (x-x), und der Schere (1) nachgeordnet, einen ortsfest angeordneten Abweiser (12) mit einem Trennkeil (13, 14) sowie einen der Schere (1, 10) zugeordneten Weggeber im Zusammenwirken mit einer elektronischen Steuereinheit aufweist.

2. Vorrichtung nach Anspruch 1, **dadurch gekennzeichnet**, dass sie eine Schrottrutsche (3) oder eine Ableitrinne (4) mit einer Häckselschere (5) aufweist, wobei die Ableitrinne (4) im Bereich des Abweisers (14) seitlich von der Walzlinie (x-x) abzweigt.

3. Vorrichtung nach Anspruch 1 oder 2, **dadurch gekennzeichnet**, dass der Schere (1, 10) Mittel (7) zum Verschieben quer zur Walzlinie (x-x) zugeordnet sind.

4. Vorrichtung nach einem der Ansprüche 1 bis 3, **dadurch gekennzeichnet**, dass die Schere (1, 10) als Motorschere ausgeführt und für Start/Stop-Betrieb ausgelegt ist, wobei als Antriebsaggregat ein oder mehrere über ein gemeinsames Getriebe mechanisch synchronisierte Elektro-Antriebs-Motoren angeordnet sind.

5. Vorrichtung nach einem oder mehreren der Ansprüche 1 bis 4, **dadurch gekennzeichnet, dass** die Schere für Rundprofile sowie für andere Walzprofile mit einem rotierenden Messersystem (1) oder mit einem Parallelschneidesystem (10) ausgerüstet ist, die mit Messerwellen ausgebildet sind.

6. Verfahren zum Abtrennen und Ableiten von Vorder- und/oder Hinterschopfen an laufendem Walzgut mit einer ein rotierendes Messersystem oder ein Parallelschneidesystem aufweisenden Schere (1, 10), wobei das Walzgut unter Verwendung einer der Schere (1, 10) vorgeordneten Schwinge (11) mit einer relativ zur Walzlinie (x-x) vorgegebenen Ausrichtung der Schere (1, 10) zugeführt, darin nach Maßgabe eines Weggebers der Vorder- und/oder Hinterschopf (29, 30) bzw. (34, 35) abgetrennt und das aus der Schere (1, 10) ablaufende Walzgut über den Trennkeil (13, 15) eines nachgeordneten Abweisers (12, 14) gehoben und ein abgetrenntes Stück Vorderschopf (29, 30) oder Hinterschopf (34, 35) in eine Schrottrutsche (3) abgeleitet oder über den Trennkeil (13, 15) des Abweisers (12, 14) einer Häckselschere (5) zugeführt und darin zerstückelt wird, **dadurch gekennzeichnet**, dass bei einem stabförmigen Walzgut mit kleinem Durchmesser zum Abtrennen eines Vorderschopfes (30) bzw. einer Probe die Schwinge (11) aus der Horizontalebene abgesenkt (26) und die Stabspitze (31) des Walzgutes unter den Trennkeil (13) des Abweisers (12) geführt wird, wobei in synchronisierten Bewegungsabläufen nach Maßgabe eines der Schere zugeordneten Weggebers die Messerträger (6) der Schere (1) aus einer definierten Startposition rotativ beschleunigt und der Vorderschopf (30) im Berührungspunkt der beiden Messer (2a) in vorgegebener Länge abgetrennt und vom Trennkeil (13) nach unten in eine Schrottrutsche (3) gelenkt, die Schwinge (11) zum Zeitpunkt des Schnittes angehoben (27) und die neugebildete Stabspitze (32) durch den unteren Messerrücken über den Trennkeil (13) in die Walzlinie (x-x) gehoben, weitergefördert und die Schere (1) in ihre Startpositionen zurückgedreht wird, und wobei vor Einlauf der Stabspitze eines folgenden Knüppels die Schwinge (11) abgesenkt wird.

7. Verfahren nach Anspruch 6, **dadurch gekennzeichnet**, dass bei einem stabförmigen Walzgut mit kleinem Durchmesser zum Abtrennen eines Hinterschopfes (35) die Schwinge (11) in der horizontalen Ebene nach Art einer Weiche gegen die Schere (1) in Richtung der Messerkonfiguration (2b, Fig. 7b) für Hinterschopf geschwenkt, vom Stabende (38) ein Stück in vorgegebener Länge als Hinterschopf (35) im Berührungspunkt der beiden Messer (2b) abgetrennt und der Hinterschopf durch den oberen Messerrücken nach unten in eine Schrottrutsche geleitet oder aus der Walzlinie (x-x) in eine der Schere (1) nachgeordnete Rinne (4) zu einer Häckselschere (5) abgeleitet, durch diese in Stücke zerteilt und die Schwinge (11) für den nächsten Stab wieder in die Walzlinie (x-x) zurückgeschwenkt wird.

8. Verfahren nach Anspruch 6, **dadurch gekennzeichnet**, dass zum Abtrennen und Ableiten eines Vorderschopfes (29) oder einer Probe bei einem stabförmigen Walzgut mit großem Durchmesser die Schwinge (11) in ihrer waagerechten Position stehen gelassen wird, wobei nach dem Schnitt der abgetrennte Vorderschopf (29) bzw. die Probe vor einem verkürzten Trennkeil (15) eines Abweisers (14) frei in eine Schrottrutsche (3) fallengelassen, die nachlaufende neugebildete Spitze (36) mittels unterem Messerrücken über den Trennkeil (15) des Abweisers (14) geworfen und das Walzgut nach Entschopfen über den Trennkeil (15) weitergefördert wird.

9. Verfahren nach Anspruch 6, **dadurch gekennzeichnet**, dass zum Abtrennen und Ableiten des Hinterschopfes (34) bei einem stabförmigen Walzgut mit großem Durchmesser die Schwinge (11) in ihrer waagerechten Position in der Walzlinie (x-x) stehen gelassen, der Stab über den Trennkeil (15) weitergefördert und bei Erreichen einer vorgegebenen Restlänge relativ zum Parallelschneidesystem (10) der Schere die Restlänge als Hinterschopf (34) abgetrennt und in einer Schrottrutsche (3) im freien Fall abgeleitet wird, wogegen der übrige Stab ungebremst weiterläuft.

10. Verfahren nach Anspruch 6 zum Abtrennen und Ableiten eines Vorderschopfes (30) bzw. einer Probe an einem mit vergleichsweise hoher Geschwindigkeit laufenden Walzprofil, **dadurch gekennzeichnet**, dass die Schwinge (11) derart aus der Horizontalebene abgesenkt wird (26), dass die Spitze (31) des Walzprofils unter den Trennkeil (13) des Abweisers (12) gerichtet ist, wobei in synchronisiertem Bewegungsablauf die Messerträger (6) der Schere (1) aus einer Startposition rotativ beschleunigt und der Vorderschopf (30) des Walzprofils im Berührungspunkt der beiden Messer (2a) in vorgegebener Länge abgetrennt und vom Trennkeil (13) nach unten in eine Schrottrutsche (3) abgeleitet und unmittelbar vor dem Zeitpunkt des Schnittes die Schwinge (11) wieder angehoben (27) und die nachlaufende Spitze (32) des Walzprofils durch den unteren Messerrücken über den Trennkeil (13) zur Walzlinie (x-x) geworfen und die Schere (1) in ihre Startposition zurückgedreht und vor Einlauf einer weiteren Stabspitze eines Knüppels die Schwinge (11) wieder abgesenkt wird.

11. Verfahren nach Anspruch 6 zum Abtrennen und Ableiten eines Vorderschopfes (29) bzw. einer Probe eines mit vergleichsweise geringer Geschwindigkeit laufenden Walzprofils, **dadurch gekennzeichnet, dass** ein Abweiser (14) mit verkürztem Trennkeil (15) verwendet und die Schwinge (11) in ihrer Ausgangsposition belassen und bei Erreichen einer vorgegebenen Länge relativ zum rotierenden Messersystem (1) diese von der Schere als Vorderschopf (29) abgetrennt und im freien Fall in eine Schrottrutsche (3) abgeleitet wird, wogegen das übrige Walzprofil über den Trennkeil ungebremst weiterläuft.

12. Verfahren nach einem oder mehreren der Ansprüche 6 bis 11, **dadurch gekennzeichnet, dass** der Bewegungsablauf der Schere (1, 10) und/oder der Schwinge (11) durch Signale eines Weggebers an der Schere (1, 10) nach Maßgabe von Geschwindigkeits- und/oder Positionssignalen einer Stabspitze (31) bzw. eines Stabendes (38) gesteuert wird.

## Claims

1. A device for cutting off and diverting trailing and/or leading ends on running stock with shears (1, 10), having a rotating cutter system or a parallel cutting system, **characterized by** a rocker (11), positioned upstream from the shears, which is rotatable around a universal joint (9) in an angle to a horizontal and/or vertical plane, having a lifting unit (16) on the end opposite to the universal joint (9) for angle adjustment and a guide organ (17) for lateral displacement out of the stock line (x-x), and, positioned downstream from the shears (1), a fixed deflector (12) with a separating wedge (13, 14), as well as a position sensor assigned to the shears (1, 10) in combination with an electronic control unit.

2. The device according to claim 1, **characterized in that** it has a scrap chute (3) or a diversion channel (4) with chopping shears (5), with the diversion channel (4) branching off laterally from the stock line (x-x) in the region of the deflector (14).

3. The device according to claim 1 or 2, **characterized in that** the shears (1, 10) are assigned means (7) for displacement transverse to the stock line (x-x).

4. The device according to one of the claims 1 to 3, **characterized in that** the shears (1, 10) are implemented as motor shears and are designed for start/stop operation, with one or more electric drive motors, mechanically synchronized via a joint gearing, provided as the drive unit.

5. The device according to one or more of the claims 1 to 4, **characterized in that** the shears are equipped, for round profiles and for other stock profiles, with a rotating cutter system (1) or with a parallel cutting system (10) implemented with cutter blocks.

6. The process for cutting off and diverting leading and/or trailing ends on running stock with shears (1, 10) having a rotating cutter system or a parallel cutting system, with the rolling stock fed to the shears (1, 10), with a predetermined alignment relative to the stock line (x-x), using a rocker (11) positioned upstream from the shears (1, 10), the leading and/or trailing ends (29, 30) and/or (34, 35) cut off therein according to a position sensor, and the running stock exiting the shears (1, 10) lifted via the separating wedge (13, 15) of a downstream deflector (12, 14), and a cut off piece of leading end (29, 30) or trailing end (34, 35) diverted into a scrap chute (3) or, via the separating wedge (13, 15) of the deflector (12, 14), fed to chopping shears (5) and cut to pieces therein, **characterized in that** for a rod-shaped rolling stock with a small diameter, to cut off a leading end (30) and/or a sample, the rocker (11) is lowered (26) out of the horizontal plane and the rod tip (31) of the rolling stock is guided under the separating wedge (13) of the deflector (12), with, in a synchronized series of motions, the cutter holder (6) of the shears (1) being rotationally accelerated from a defined starting position according to a position sensor assigned to the shears and the leading end (30) being cut off at a predetermined length at the contact point of the two cutters (2a) and diverted downward by the separating wedge (13) into a scrap chute (3), the rocker (11) being lifted (27) at the time of cutting, and the newly formed rod tip (32) being lifted by the lower cutter backs over the separating wedge (13) into the stock line (x-x) and conveyed further, and the shears (1) being pivoted back into their starting position, and with the rocker (11) being lowered before arrival of the rod tip of a following billet.

7. The process according to claim 6, **characterized in that** for a rod-shaped rolling stock with a small diameter, to cut off a trailing end (35), the rocker (11) pivots in the horizontal plane like a shunt against the shears (1) in the direction of the cutter configuration (2b, Fig. 7b) for a trailing end, a piece of a predetermined length is cut off as the trailing end (35) from the end of the rod (38) at the contact point of the two cutters (2b), and the trailing end is guided downward by the upper cutter backs into a scrap chute or diverted out of the stock line (x-x), into a channel (4) located downstream from the shears (1), to chopping shears (5), chopped into pieces by them, and the rocker (11) is pivoted back into the stock line (x-x) for the next rod.

8. The process according to claim 6, **characterized in that**, to cut off and divert a leading end (29) or a sample from a rod-shaped rolling stock with a large diameter, the rocker (11) is left in its horizontal position, with the cut-off leading end (29) and/or the sample being allowed to fall freely after cutting into a scrap chute (3) in front of a shortened separating wedge (15) of a deflector (14), the following newly formed tip (36) being thrown over the separating wedge (15) of the deflector (14) by means of the lower cutter backs, and the rolling stock being conveyed further over the separating wedge (15) after removal of the end.

9. The process according to claim 6, **characterized in that**, to cut off and divert the trailing end (34) from a rod-shaped rolling stock with a large diameter, the rocker (11) is left in its horizontal position in the stock line (x-x), the rod is conveyed further over the separating wedge (15), and, upon reaching a predetermined residual length relative to the parallel cutting system (10) of the shears, the residual length is cut off as the trailing end (34) and diverted into a scrap chute (3) in freefall, while the remaining rod, in contrast, continues unchecked.

10. The process according to claim 6 for cutting off and diverting a leading end (30) and/or a sample from a rolling stock profile running at a relatively high speed, **characterized in that** the rocker (11) is lowered (26) out of the horizontal plane in such a way that the tip (31) of the rolling stock profile is directed under the separating wedge (13) of the deflector (12), with, in a synchronized series of movements, the cutter carriers (6) of the shears (1) being rotatively accelerated from a starting position and the leading end (30) of the rolling stock profile being cut off at the contact point of the two cutters (2a) at a predetermined length and diverted downward by the separating wedge (13) into a scrap chute (3) and, immediately before the point of cutting, the rocker (11) being raised back up (27) and the following tip (32) of the rolling stock profile being thrown by the lower cutter backs over the separating wedge (13) to the stock line (x-x), and the shears (1) being rotated back into their starting position, and the rocker (11) being again lowered before the arrival of a further rod tip of a billet.

11. The process according to claim 6 for cutting off and diverting a leading end (29) and/or a sample of a rolling stock profile running at a comparatively low speed, **characterized in that** a deflector (14) with a shortened separating wedge (15) is used and the rocker (11) is left in its initial position and, upon reaching a predetermined length relative to the rotating cutter system (1), this length is cut off by the shears as the leading end (29) and diverted in freefall into a scrap chute (3), with, in contrast, the remaining rolling stock profile continuing unchecked over the separating wedge.

12. The process according to one or more of the claims 6 to 11, **characterized in that** the sequence of movements of the shears (1, 10) and/or the rocker (11) is controlled by signals of a position sensor to the shears (1, 10) according to speed and/or position signals of a rod tip (31) and/or a rod end (38).

## Revendications

1. Appareil pour couper et évacuer le bout de tête et/ou le bout de queue d'une matière laminée en mouvement avec un système tournant à lames ou des ciseaux (1, 10) comprenant un système de coupe parallèle, **caractérisé par** un bras oscillant (11) disposé devant ceux-ci, pouvant pivoter autour d'une articulation à cardan selon (9) un angle par rapport à un plan horizontal ou vertical, lequel bras oscillant comprend au niveau de l'extrémité opposée à l'articulation à cardan (9), une unité de levage (16) pour régler l'inclinaison et un organe de guidage (17) en vue d'une déviation latérale hors de la ligne de laminage (x-x), et en aval des ciseaux (1), un déflecteur (12) disposé de façon fixe avec un coin séparateur (13, 14) ainsi qu'un capteur de déplacement associé à un des ciseaux (1, 10) coopérant avec une unité de commande électronique.

2. Appareil selon la revendication 1, **caractérisé en ce qu'**il comprend un toboggan (3) pour rebuts ou une goulotte d'évacuation (4) avec des ciseaux hacheurs (5), la goulotte d'évacuation (4) bifurquant latéralement de la ligne de laminage (x-x) dans la zone du déflecteur (14).

3. Appareil selon la revendication 1 ou 2, **caractérisé en ce que** des moyens (7) sont associés aux ciseaux (1, 10) pour un déplacement transversal par rapport à la ligne de laminage (x-x).

4. Appareil selon l'une quelconque des revendications 1 à 3, **caractérisé en ce que** les ciseaux (1, 10) sont formés en tant que ciseaux motorisés et conçus pour un fonctionnement arythmique, dans lequel sont disposés un ou plusieurs moteurs à propulsion électrique synchronisés mécaniquement par une boîte d'engrenages.

5. Appareil selon l'une quelconque des revendications 1 à 4, **caractérisé en ce que** les ciseaux pour profilés ronds ainsi que pour d'autres profilés de laminage sont équipés d'un système tournant à lames (1) ou d'un système de coupe parallèle (10).

6. Procédé pour couper et évacuer les bouts de tête et de queue d'une matière laminée en mouvement avec un système tournant à lames ou des ciseaux (1, 10) comprenant un système de coupe parallèle, dans lequel la matière laminée est acheminée, en employant un bras oscillant (11) en amont des ciseaux (1, 10), avec une orientation prédéterminée par rapport à la ligne de laminage (x-x), vers des ciseaux (1, 10) où le bout de tête et/ou le bout de queue (29, 30) respectivement (34, 35) sont coupés conformément à un capteur de déplacement et la matière laminée sortant des ciseaux (1, 10) est soulevée au-dessus du coin séparateur (13, 15) d'un déflecteur (12, 14) en aval et un morceau de bout de tête (29, 30) ou de bout de queue (34, 35) coupé est évacué dans un toboggan à rebuts (3) ou acheminé vers des ciseaux hacheurs (5) au-dessus du coin séparateur (13, 15) du déflecteur (12, 14) et y est déchiqueté, **caractérisé en ce que**, pour une matière laminée en forme de barre ayant un petit diamètre, le bras oscillant (11) est abaissé (26) du plan horizontal pour couper un bout de tête (30) ou un échantillon et la pointe (31) de la barre de matière laminée est dirigée sous le coin séparateur (13) du déflecteur (12), procédé dans lequel, dans des cycles de mouvement synchronisés conformément à un capteur de déplacement associé aux ciseaux, les supports (6) de lame des ciseaux (1) sont accélérés en rotation en partant d'une position de départ définie, et le bout de tête (30) est coupé selon une longueur prédéterminée au point de contact des deux lames (2a) puis dirigé par le coin séparateur (13) vers le bas dans un toboggan à rebuts (3), le bras oscillant (11) se soulève (27) au moment de la coupe et la nouvelle pointe (32) formée de la barre est soulevée par le dos inférieur de la lame, au-dessus du coin séparateur (13) dans la ligne de laminage (x-x), et transportée plus loin et les ciseaux (1) sont ramenés par rotation dans leurs positions de départ, et le bras oscillant (11) étant abaissé avant l'arrivée de la pointe de barre d'une billette suivante.

7. Procédé selon la revendication 6, **caractérisé en ce que**, pour une matière laminée en forme de barre ayant un petit diamètre, le bras oscillant (11) est pivoté dans le plan horizontal à la façon d'un aiguillage pour amener le bout de queue (35) contre les ciseaux (1) dans la direction de la configuration de lames (2b, figure 7b) en vue de séparer un bout de queue (35), un morceau d'une longueur prédéterminée en tant que bout de queue (35) est coupé de l'extrémité de la barre (38) au point de contact des deux lames (2b) et le bout de queue est dirigé par le dos supérieur de la lame vers le bas dans un toboggan à rebuts ou évacué de la ligne de laminage (x-x) dans une goulotte (4) en aval des ciseaux (1) conduisant à des ciseaux hacheurs (5), puis découpé en morceaux par ces derniers et le bras oscillant (11) est ramené par pivotement dans la ligne de laminage (x-x) pour la barre suivante.

8. Procédé selon la revendication 6, **caractérisé en ce que**, pour couper et évacuer un bout de tête (29) ou un échantillon dans une matière laminée en forme de barre ayant un grand diamètre, le bras oscillant (11) est laissé dans sa position horizontale, où, après la coupe, on laisse le bout de tête coupé (29) ou l'échantillon tomber librement dans une goulotte à rebuts (3) devant un coin séparateur (15) raccourci d'un déflecteur (14), la nouvelle pointe formée suivante (36) est projetée au moyen du dos de la lame inférieure sur le coin séparateur (15) du déflecteur (14) et la matière laminée après avoir été éboutée, est transportée plus loin par le coin séparateur (15).

9. Procédé selon la revendication 6, **caractérisé en ce que**, pour couper et évacuer le bout de queue (34) dans une matière laminée en forme de barre ayant un grand diamètre, le bras oscillant (11) est laissé dans sa position horizontale sur la ligne de laminage (x-x), la barre est transportée plus loin via le coin séparateur (15) et lorsqu'elle atteint une longueur résiduelle prédéterminée par rapport au système de coupe parallèle (10) des ciseaux, la longueur résiduelle (34) est coupée en tant que bout de queue et évacuée dans une goulotte à rebuts (3) en y tombant librement, alors que le restant de la barre poursuit sa course sans être freiné.

10. Procédé selon la revendication 6 pour couper et évacuer un bout de tête (30) ou un échantillon sur un profilé de laminage se déplaçant à une vitesse comparativement plus élevée, **caractérisé en ce que** le bras oscillant (11) est abaissé (26) du plan horizontal de sorte que la pointe (31) du profilé de laminage est dirigée sous le coin séparateur (13) du déflecteur (12), procédé dans lequel, dans un cycle de déplacement synchronisé, les supports (6) de lames des ciseaux (1) sont accélérés en rotation à partir d'une position de départ et le bout de tête (30) du profilé de laminage est coupé au point de contact des deux lames (2a) selon une longueur prédéterminée puis évacué par le coin séparateur (13) vers le bas dans une goulotte à rebuts (3) et le bras oscillant (11) est de nouveau soulevé (27) immédiatement avant l'instant de la coupe et la pointe suivante (32) du profilé de laminage est projetée par le dos de lame inférieur vers la ligne de laminage (x-x) via le coin séparateur (13) et les ciseaux (1) sont ramenés par rotation dans leurs positions de départ et le bras oscillant (11) est de nouveau abaissé avant l'arrivée d'une nouvelle pointe de barre d'une billette.

11. Procédé selon la revendication 6 pour couper et évacuer un bout de tête (29) ou un échantillon d'un profilé de laminage en mouvement avec une vitesse comparativement plus faible, **caractérisé en ce qu'**un déflecteur (14) est employé avec un coin séparateur raccourci (15) et le bras oscillant (11) est laissé dans sa position de départ et lorsque le profilé atteint une longueur prédéterminée par rapport au système tournant à lame (1), cette dernière longueur est coupée par les ciseaux en tant que bout de tête (29) et évacuée en tombant librement dans une goulotte à rebuts (3), alors que le reste du profilé de laminage poursuit sa course via le coin séparateur sans être freiné.

12. Procédé selon l'une ou plusieurs des revendications 6 à 11, **caractérisé en ce que** le cycle de mouvement des ciseaux (1, 10) et/ou du bras oscillant (11) est commandé par des signaux d'un capteur de déplacement au niveau des ciseaux (1, 10) conformément aux signaux de vitesse et/ou de position d'une pointe de barre (31) ou d'une extrémité de barre (38).
